(19) Europäisches Patentamt

European Patent Office

Office européen des brevets

(11) EP 0 881 065 A1

(12) EUROPEAN PATENT APPLICATION
published in accordance with Art. 158(3) EPC

(43) Date of publication:
02.12.1998 Bulletin 1998/49

(51) Int. Cl.⁶: **B32B 5/18**, B32B 27/30, B32B 27/32

(21) Application number: 96943293.9

(22) Date of filing: 26.12.1996

(86) International application number:
PCT/JP96/03799

(87) International publication number:
WO 97/24227 (10.07.1997 Gazette 1997/30)

(84) Designated Contracting States:
DE FR

(30) Priority: 27.12.1995 JP 341149/95
27.12.1995 JP 341150/95

(71) Applicant:
SUMITOMO CHEMICAL COMPANY LIMITED
Osaka-shi, Osaka 541-0041 (JP)

(72) Inventors:
• OHTANI, Kohsuke
Osaka 567 (JP)

• NAKATSUJI, Yoshihiro
Osaka 561 (JP)
• SHIMIZU, Hikaru
Osaka-shi Osaka 555 (JP)
• SUGIMOTO, Hiroyuki
Shiga 520-23 (JP)
• USUI, Nobuhiro
Osaka 569 (JP)

(74) Representative:
VOSSIUS & PARTNER
Siebertstrasse 4
81675 München (DE)

(54) THREE-LAYER STRUCTURE, POLYOLEFIN MOLDING, AND PROCESSES FOR THE PRODUCTION OF BOTH

(57) A three-ply laminate consisting of a vinyl chloride resin layer (the first layer), a layer of a composition containing a vinyl chloride resin and an olefin polymer which has a complex dynamic viscosity $\eta^*$ of $1.2 \times 10^5$ poises or less (the third layer), and a vinyl chloride resin foamed layer (the second layer) which is present between the first and third layers is provided. Also a method for the production of the above three-ply laminate by powder molding is provided. Furthermore, a molded article comprising a polyolefinic polymer substrate and a skin material consisting of the above three-ply laminate which is laminated on the surface of the substrate, and a method for the production of the same are provided.

Fig. 5

EP 0 881 065 A1

**Description**

BACKGROUND OF THE INVENTION

Field of the Invention

The present invention relates to a three-ply laminate consisting of a vinyl chloride resin layer, a layer made of a composition containing a vinyl chloride resin and an olefin polymer, and a foamed layer made of a vinyl chloride resin which is present between the above two layers, and applications of such a laminate.

Description of the Related Art

Resin molded articles having complicated irregular decorations such as grains, stitches and the like are used, for example, as interior parts of automobiles. As such resin molded articles, those comprising a substrate of a polyolefin resin and a skin material of a vinyl chloride resin which is adhered to the surface of the substrate are known (see JP-A-63-251206). However, such molded articles have insufficient cushioning properties, and imperfect bond strength between the substrate and skin material.

To solve such problems, a molded article having a foamed layer between the skin layer of a vinyl chloride resin and the substrate of a polyolefin resin is proposed (see JP-A-2-198812). However, this molded article still has insufficient cushioning properties, and imperfect bond strength between the foamed layer and substrate.

JP-A-6-270682 discloses a molded article comprising a polyolefin resin substrate, and a skin material which consists of a vinyl chloride resin solid layer, a vinyl chloride resin foamed layer and a solid layer made of a composition containing a vinyl chloride resin and a polyolefin resin. However, the further improvement of the bond strength between the skin material and substrate is desired.

SUMMARY OF THE INVENTION

The present inventors have made extensive studies on laminates which have good bond strength with polyolefinic polymers and are useful as skin materials of molded articles. As a result, it has been found that, when a three-ply laminate consists of a vinyl chloride resin layer (the first layer), a layer of a composition comprising a vinyl chloride resin and an olefin polymer (the third layer), and a vinyl chloride resin foamed layer (the second layer) which is present between the first and third layers, and the olefin polymer in the third layer has a specific complex dynamic viscosity $\eta^*$, the laminate has good adhesion properties with a polyolefinic polymer, and thus the present invention has been completed.

According to the first aspect, the present invention provides a three-ply laminate consisting of a vinyl chloride resin layer (the first layer), a layer of a composition containing a vinyl chloride resin and an olefin polymer which has a complex dynamic viscosity $\eta^*$ of $1.2 \times 10^5$ poises or less (the third layer), and a vinyl chloride resin foamed layer (the second layer) which is present between the first and third layers. When the third layer is a foamed one, the bond strength between the third layer and the polyolefinic polymer is excellent.

According to the second aspect, the present invention provides a method for the production of the above three-ply laminate, which comprises the steps of:

1) supplying a vinyl chloride resin powder on the molding surface of a mold for powder molding, said molding surface being heated to a temperature not lower than the melting temperature of said resin,
2) fusing the particles of said powder together and forming the first resin layer of said vinyl chloride resin,
3) supplying the powder of a composition (A) comprising a vinyl chloride resin and a foaming agent on said first resin layer which is being heated to a temperature not lower than the melting temperature of said composition (A),
4) fusing the powder particles of said composition (A) together and forming the second resin layer of said composition (A) on the first resin layer,
5) supplying the powder of a composition (B) comprising a vinyl chloride resin and an olefin polymer having a complex dynamic viscosity $\eta^*$ of $1.2 \times 10^5$ poises or less on said second resin layer which is being heated to a temperature not lower than the melting temperature of said composition (B),
6) fusing the powder particles of said composition (B) together and forming the third resin layer of said composition (B) on the second resin layer to form the laminate consisting of the first, second and third resin layers, and
7) heating said laminate to a temperature not lower than the decomposition temperature of the foaming agent contained in said composition (A) to foam said second layer.

When the composition (A) used in the above step 3) additionally contains a quaternary ammonium salt and a polyfunctional epoxy compound, a three-ply laminate, which is useful as a skin material for providing a molded article with improved cushioning properties, can be obtained.

When the composition (B) used in the step 5) additionally contains a foaming agent, and the second and third resin layers are both foamed in the step 7), a laminate in which the second and third resin layers are both foamed layers can be obtained.

According to the third aspect, the present invention provides a molded article comprising a substrate made of a polyolefinic polymer, and a skin material consisting of the above three-ply laminate which is adhered to the surface of the substrate. This molded article has excellent bond strength between the substrate and skin material.

According to the fourth aspect, the present invention provides a method for the production of the above molded article comprising the steps of:

supplying a mass of a polyolefinic polymer, at least the surface of which is molten, on the third layer side of the skin material consisting of the above three-ply laminate,
compressing said skin material and said polyolefinic polymer to integrate them, and
cooling the integrated skin material and polyolefinic polymer.

BRIED DESCRIPTION OF THE DRAWINGS

Fig. 1 shows the cross sections of a container containing the powder of a vinyl chloride resin for the first layer of a three-ply laminate, and a mold for powder molding which is paired with the container.

Fig. 2 shows the cross sections of a mold for powder molding, and a three-ply laminate of the present invention which is held on the molding surface of the mold.

Fig. 3 shows the operating state of the method of the present invention for the production of a molded article, in which a female mold is formed of a mold for powder molding, which holds a three-ply laminate on its molding surface, and a mold base which is paired with the mold for powder molding, and the melt of a polypropylene is being supplied through a resin passage formed in a male mold.

Fig. 4 shows the cross sections of closed male and female molds.

Fig. 5 shows the cross section of a molded article according to the present invention, which comprises a skin material consisting of a three-ply laminate of the present invention, and a polyolefinic polymer substrate.

DETAILED DESCRIPTION OF THE INVENTION

The three-ply laminate of the present invention consists of a vinyl chloride resin layer (the first layer), the layer of a composition containing a vinyl chloride resin and an olefin polymer which has a complex dynamic viscosity $\eta^*$ of 1.2 x $10^5$ poises or less (the third layer), and a vinyl chloride resin foamed layer (the second layer) which is present between the first and third layers. Essentially, the respective surfaces of the second layer are adhered directly to the first and third layers, respectively. The three-ply laminate of the present invention may have an interfacial layer in which the components of the two adjacent layers intermingle. The three-ply laminate of the present invention includes such an embodiment.

The main characteristic of the three-ply laminate of the present invention resides in the composition of the third layer. The third layer comprises a composition containing a vinyl chloride resin, and an olefin polymer which has a complex dynamic viscosity $\eta^*$ of 1.2 x $10^5$ poises or less. The three-ply laminate of the present invention has the better bonding properties with a polyolefinic polymer than the conventional laminates, since the third layer contains the olefin polymer having a complex dynamic viscosity $\eta^*$ of 1.2 x $10^5$ poises or less.

Examples of the vinyl chloride resin to be contained in the third layer include vinyl chloride homopolymers, copolymers of vinyl chloride and at least one comonomer (e.g. vinyl chloride-vinyl acetate copolymer, vinyl chloride-ethylene copolymer, vinyl chloride-propylene copolymer, vinyl chloride-isobutylene copolymer, vinyl chloride-styrene copolymer, vinyl chloride-vinylidene chloride copolymer, vinyl chloride-butadiene copolymer, vinyl chloride-acrylate copolymer, vinyl chloride-maleate copolymer, vinyl chloride-methacrylate copolymer, vinyl chloride-acrylonitrile copolymer, vinyl chloride-styrene-maleic anhydride terpolymer, vinyl chloride-vinylidene chloride-vinyl acetate terpolymer, vinyl chloride-styrene-acrylonitrile terpolymer, etc.), vinyl chloride-grafted ethylene-vinyl acetate copolymers, and mixtures of two ore more of these polymers.

Examples of the olefin polymer to be contained in the third layer are thermoplastic olefin resins, thermoplastic olefin elastomers, and the like.

The thermoplastic olefin resin is a crystalline (co)polymer which is obtained by (co)polymerizing at least one olefin. Examples of the olefin are olefins having 2 to 8 carbon atoms such as ethylene, propylene, butene, hexene, octene, etc. Examples of the thermoplastic olefin resin are polyethylene resins such as ethylene homopolymers, copolymers of ethylene and at least one other olefin (e.g. ethylene-propylene copolymer, ethylene-1-butene copolymer, etc.); polypropylene resins such as polypropylene and copolymers of propylene and other olefin (e.g. propylene-ethylene copolymer, propylene-1-butene copolymer, propylene-2-butene copolymer, etc.); and the like.

Examples of the thermoplastic olefin elastomer are ethylene-$\alpha$-olefin copolymer rubbers, compositions comprising ethylene-$\alpha$-olefin copolymer rubbers and the above olefin resins, partially crosslinked compositions comprising ethylene-$\alpha$-olefin copolymer rubbers and the above olefin resins.

The ethylene-$\alpha$-olefin copolymer rubbers include amorphous ethylene-$\alpha$-olefin copolymers, amorphous ethylene-$\alpha$-olefin-non-conjugated diene copolymers, and their mixtures. Examples of the $\alpha$-olefin are $\alpha$-olefins having 3 to 5 carbon atoms such as propylene, butene, etc. Examples of the non-conjugated diene are dicyclopentadiene, ethylidenenorbornene, 1,4-hexadiene, cyclooctadiene, methylenenorbornene, etc. Examples of the ethylene-$\alpha$-olefin copolymer rubbers are ethylene-propylene copolymer rubbers, ethylene-propylene-ethylidenenorbornene copolymer rubbers (EPDM), and the like. Among them, EPDM is preferable in view of the heat resistance and mechanical strength of the third layer. Furthermore, ethylene-$\alpha$-olefin copolymer rubbers having $ML_{1+4}$ (100°C) in the range between 130 and 350, in particular, between 200 and 300 are preferable. Herein, $ML_{1+4}$ (100°C) means a Mooney viscosity measured at 100°C according to ASTM D-927-57T.

When the thermoplastic olefin elastomer is a composition comprising the above ethylene-$\alpha$-olefin copolymer rubber and the above olefin resin, the weight ratio of the ethylene-$\alpha$-olefin copolymer rubber to the olefin resin is in the range between 1:99 and 95:5.

The above partially crosslinked composition comprising the ethylene-$\alpha$-olefin copolymer rubber and olefin resin means a composition which is obtained by compounding a crosslinking agent in the above composition comprising the ethylene-$\alpha$-olefin copolymer rubber and olefin resin, and dynamically crosslinking the composition. Mainly, the partially crosslinked composition comprises the olefin resin, and the crosslinked ethylene-$\alpha$-olefin copolymer rubber. The partially crosslinked composition may contain a crosslinked olefin resin, or a material having the crosslinked structure between the olefin resin and ethylene-$\alpha$-olefin copolymer rubber.

The thermoplastic elastomers may contain softening agents. For example, the thermoplastic elastomers containing mineral oil base softening agents (e.g. paraffinic process oils, etc.) can provide the third layer having good bonding properties with the polyolefinic polymer.

The content of the mineral oil base softening agent in the thermoplastic elastomer is usually 120 wt. parts or less, preferably between 20 and 120 wt. parts, per 100 wt. parts of the polymer components, that is, the thermoplastic olefin resin and the ethylene-$\alpha$-olefin copolymer rubber which may be crosslinked.

The olefin polymer for the third layer should have a complex dynamic viscosity $\eta^*$ of 1.2 x $10^5$ poises or less, in view of the bonding properties of the third layer with the polyolefinic polymer which is bonded to the third layer. Preferably, $\eta^*$ is in the range between 100 and 1.2 x $10^5$ poises.

The complex dynamic viscosity $\eta^*$ is calculated in accordance with the following equation (1):

$$\eta^* = [(G^1)^2 + (G^2)^2]^{1/2} \cdot \omega \tag{1}$$

from a storage elastic modulus $G^1$ and a loss elastic modulus $G^2$, which are measured at a sample temperature of 250°C and a frequency $\omega$ of 1 radian/sec.

The content of the olefin polymer in the third layer is preferably in the range between 10 and 350 wt. parts per 100 wt. parts of the vinyl chloride resin in the third layer, in view of the bonding properties between the third and second layer, or between the third layer and the polyolefinic polymer to be bonded to the third layer.

The third layer of the three-ply laminate of the present invention is preferably a foamed layer for achieving improved bonding properties with the polyolefinic polymer which is bonded to the third layer. The bonding properties can be improved by slight foaming of the third layer. Practically, the bonding properties can be improved with an expansion ratio of at least 1.01, while the expansion ratio is preferably between 1.01 and 1.5.

The thickness of the third layer is usually between 100 $\mu$m and 5 mm. The third layer is fused together with the second layer, which will be explained later.

The first layer of the three-ply laminate of the present invention comprises primarily a vinyl chloride resin, and in general, is a solid layer. The vinyl chloride resin may be the same as the vinyl chloride resin which is explained for the third layer, but the kind of the vinyl chloride resin for the first layer is selected independently of that for the third layer. The first layer may contain a thermoplastic resin other than the vinyl chloride resin or a thermoplastic elastomer in an amount of 30 wt. % or less of the vinyl chloride resin.

The thickness of the first layer is usually between 300 $\mu$m and 1.5 mm. The outer surface (unbonded to the second layer) of the first layer may have three-dimensional decorations such as grains, stitches, etc. The first layer is fused together with the second layers which will be explained below.

The second layer of the three-ply laminate of the present invention is a foamed layer comprising primarily a vinyl chloride resin. This vinyl chloride resin may be the same as the vinyl chloride resin which is explained for the third layer, but the kind of the vinyl chloride resin for the second layer is selected independently of that for the third layer.

The expansion ratio of the second layer is usually between 1 and 10, preferably between 3 and 5.

The thickness of the second layer is usually between 1 and 10 mm. The second layer is fused together with the first and third layer, which are explained in the above, on the respective surfaces of the second layer.

Each of the first, second and third layers may contain any conventional additives such as plasticizers, stabilizers, and the like.

Examples of the plasticizers include dialkyl terephthalates having 9 to 11 carbon atoms in each alkyl group (e.g. diisodecyl terephthalate, diisoundecyl terephthalate, etc.), trialkyl trimellitates having 7 to 11 carbon atoms in each alkyl group (e.g. trioctyl trimellitate, tri-2-ethylhexyl trimellitate, tridecyl trimellitate, etc.), and the like. The plasticizers may be used singly or in admixture of two or more.

Examples of the stabilizers include compounds of metals (e.g. zinc, barium, sodium, potassium, calcium, lithium, tin, etc.), for example, carboxylate salts. In particular, complex stabilizers comprising two or more stabilizers are preferable.

Each layer may contain, as a stabilizer, magnesium oxide, magnesium hydroxide, a hydrotalcite compound, lithium-aluminum double hydroxide, a perchlorate ion type hydrotalcite compound, a perchlorate ion type lithium-aluminum double hydroxide, zinc oxide, barium oxide, calcium oxide, barium phosphate, and the like.

Each layer may contain an antioxidant (e.g. phenol type antioxidant, thioether type antioxidant, phosphorus type antioxidant, etc.), a light stabilizer (e.g. diketo compound type light stabilizer, salicylic acid type light stabilizer, benzophenone type light stabilizer, benzotriazole type light stabilizer, etc.), or an epoxy compound.

The foamed layers (the second and third layers) may contain a foaming aid or a foam stabilizer. Examples of the foaming aid include zinc oxide, zinc nitrate, zinc stearate, zinc octanoate, etc. Examples of the foam stabilizer include acrylic resins of methyl (meth)acrylate, etc.

The three-ply laminate provides a molded article having good cushioning properties, and comprising the firmly bonded skin material and substrate, when the laminate is bonded to the surface of a substrate comprising a polyolefinic polymer.

The three-ply laminate may be produced by any powder molding method, or by the lamination of three sheets or films which correspond to the three layers, respectively.

The powder molding methods include fluidization dip coating, powder sinter molding, electrostatic coating, powder spray coating, rotational powder molding, and powder slush molding (see JP-A-58-132057).

Practically, the three-ply laminate of the present invention can be produced by a method comprising the following steps:

1) supplying a vinyl chloride resin powder on the molding surface of a mold for powder molding, said molding surface being heated to a temperature not lower than the melting temperature of said resin,

2) fusing the particles of said powder together and forming the first resin layer of said vinyl chloride resin,

3) supplying the powder of a composition (A) comprising a vinyl chloride resin and a foaming agent on said first resin layer which is being heated to a temperature not lower than the melting temperature of said composition (A),

4) fusing the powder particles of said composition (A) together and forming the second resin layer of said composition (A) on the first resin layer,

5) supplying the powder of a composition (B) comprising a vinyl chloride resin and an olefin polymer having a complex dynamic viscosity $\eta^*$ of $1.2 \times 10^5$ poises or less on said second resin layer which is being heated to a temperature not lower than the melting temperature of said composition (B),

6) fusing the powder particles of said composition (B) together and forming the third resin layer of said composition (B) on the second resin layer to form the laminate consisting of the first, second and third resin layers, and

7) heating said laminate consisting of the above three layers to a temperature not lower than the decomposition temperature of the foaming agent contained in said composition (A) to foam said second layer.

The above method may include a step for removing non-fused powder, when a part of the supplied composition powder remains unfused. Such a step for removing the unfused powder is usually carried out after the step (2), (4) or (6).

The three-ply laminate is finished in the step (7). In general, the three-ply laminate is cooled.

The vinyl chloride resin powder used in the step (1) may be prepared by compounding a fine particle vinyl chloride resin in a granular vinyl chloride resin.

The particle size of the granular vinyl chloride resin is usually in the range between 50 and 300 $\mu$m, preferably in the range between 100 and 200 $\mu$m. Such a granular vinyl chloride resin can be produced by suspension or bulk polymerization.

The fine particle vinyl chloride resin is used for coating the granular vinyl chloride resin, and its particle size is usually in the range between 0.1 and 10 $\mu$m, preferably in the range between 0.5 and 5 $\mu$m. The fine particle vinyl chloride resin can be produced by emulsion or micro-suspension polymerization.

The fine particle vinyl chloride resin is used usually in an amount of between 5 and 20 wt. parts, preferably between 8 and 15 wt. parts per 100 wt. parts of the granular vinyl chloride resin.

In general, the granular vinyl chloride resin and fine particle vinyl chloride resin are compounded at a temperature in the range between 40 and 80°C.

The vinyl chloride resin or its powder may contain any additives such as the above described plasticizers and stabilizers.

The powder of the composition A, which is used in the step (3), comprises a vinyl chloride resin and a foaming agent, and can be prepared by dry blending the granular vinyl chloride and foaming agent, and then compounding the fine particle vinyl chloride resin.

In general, heat decomposable foaming agents are used as the foaming agents, and examples of such foaming agents include azo compounds (e.g. azodicarbonamide, 2,2'-azobisisobutyronitrile, diazodiaminobenzene, etc.), sulfonylhydrazide compounds (e.g. benzenesulfonylhydrazide, benzene-1,3-sulfonylhydrazide, diphenylsulfone-3,3'-disulfonylhydrazide, diphenyloxide-4,4'-oxybis(benzenesulfonylhydrazide), p-toluenesulfonylhydrazide, etc.), nitroso compounds (e.g. N,N'-dinitrosopentamethylenetetramine, N,N'-dinitroso-N,N'-dimethylterephthalamide, etc.), azide compounds (e.g. terephthalazide, p-tert.-butylbenzazide, etc.), carbonates (e.g. sodium hydrogen carbonate, ammonium hydrogen carbonate, ammonium carbonate, etc.), and the like. The foaming agents may be used singly or in admixture of two or more. Azodicarbonamide is preferable for the formation of the uniformly foamed second layer.

The foaming agent is used usually in an amount of between 0.1 and 20 wt. parts, preferably between 1 and 10 wt. parts per 100 wt. parts of the vinyl chloride resin.

The used granular and fine particle vinyl chloride resins may be the same as those used in the step (1).

The granular vinyl chloride resin and foaming agent are dry blended with a jacketed blender or a jacketed high speed mixer at a temperature in the range between 60 and 130°C while circulating a refrigerant in the jacket for dissipating the heat from the system. It is particularly preferred to use an apparatus which prevents agglomeration of the powder particles by the shear force exerted on the powder, for example, a high speed mixer. The compounding of the fine particle vinyl chloride resin is usually carried out at a temperature in the range between 40 and 80°C.

When the composition A additionally contains a quaternary ammonium salt and a polyfunctional epoxy compound, the three-ply laminate has improved cushioning properties.

Examples of the quaternary ammonium compound include trioctylmonomethylammonium chloride, N-methylpyridiniumammonium chloride, etc. The quaternary ammonium chlorides may be used singly or in admixture of two or more.

The quaternary ammonium compound may be used in an amount of 5 wt. parts or less, preferably between 0.02 and 5 wt. parts per 100 wt. parts of the vinyl chloride resin.

The polyfunctional epoxy compound means a compound having at least 2 epoxy groups in one molecule. Examples of the polyfunctional epoxy compound include epoxidized soybean oil, epoxidized linseed oil, epoxy resins, and the like. The epoxy compounds may be used singly or in admixture of two or more.

The epoxy compound may be used in an amount of 30 wt. parts or less, preferably between 1 and 30 wt. parts per 100 wt. parts of the vinyl chloride resin.

The quaternary ammonium salt and polyfunctional epoxy compound are usually dry blended with the granular vinyl chloride resin together with the foaming agent.

The composition A may additionally contain any additives such as the above described plastisizers, stabilizers, foaming aids, foam stabilizers, and the like.

The powder of the composition B used in the step (5) comprises a vinyl chloride resin and an olefin polymer having a complex dynamic viscosity $\eta^*$ of $1.2 \times 10^5$ poises or less. Such a composition can be produced by compounding a fine particle vinyl chloride resin in a granular vinyl chloride resin, and then compounding an olefin polymer having a complex dynamic viscosity $\eta^*$ of $1.2 \times 10^5$ poises or less in the vinyl chloride resins.

The granular vinyl chloride resin and fine particle vinyl chloride resin are compounded usually at a temperature in the range between 40 and 80°C. The olefin polymer powder is compounded usually at a temperature of 80°C or less.

The granular vinyl chloride resin and fine particle vinyl chloride resin used in this step are the same as those used in the step (1).

The particle size of the olefin polymer powder is usually between 0.1 and 300 $\mu$m, preferably between 1 and 250 $\mu$m. The particle size of the olefin polymer can be adjusted during the production of the polymer, or by grinding the olefin polymer, which has been cooled to a temperature lower than the glass transition temperature of the polymer, to a desired particle size.

The composition B may contain the same additives as those contained in the composition A. In general, such additives are dry blended with the granular vinyl chloride resin.

The complex dynamic viscosity $\eta^*$ of the olefin polymer is adjusted to $1.2 \times 10^5$ poises or less by the selection of the polymerization degree, crosslinking degree and compounding ratios of the polymer components, and the kinds and amounts of additives.

The composition B may further contain a foaming agent, when the third layer of the three-ply laminate is a foamed layer. In this case, the laminate is heated to a temperature which is higher than the decomposition temperatures of the foaming agent in the composition A and that in the composition B in the step (7). The foaming agent for the composition B may be selected from the same foaming agents as those for the composition A.

The foaming agent is used in an amount in the range between 0.1 and 20 wt. parts, preferably in the range between 1 and 10 wt. parts per 100 wt. parts of the total weight of the vinyl chloride resin and olefin resin in the composition B.

The powder of the composition B containing the foaming agent can be produced, for example, by dry blending the foaming agent in the granular vinyl chloride resin, then compounding the fine particle vinyl resin, and further compounding the olefin polymer powder. The dry blending of the granular vinyl chloride resin and foaming agent is carried out in the same way as that in the case of the composition A. Alternatively, the fine particle vinyl chloride resin is compounded with the granular vinyl chloride resin, and then the olefin polymer containing the foaming agent is compounded. Furthermore, the fine particle vinyl chloride resin is compounded with the granular vinyl chloride, and then the olefin polymer and foaming agent are compounded.

Now, the preparation of a partially crosslinked composition comprising a thermoplastic olefin resin and an ethylene-$\alpha$-olefin copolymer rubber, which can be used in the composition B, will be explained.

The partially crosslinked composition is generally prepared by kneading a crosslinking agent with a composition, which has been prepared by kneading the thermoplastic olefin resin and ethylene-$\alpha$-olefin copolymer rubber, and then dynamically crosslinking the mixture.

Examples of the crosslinking agent include organic peroxides such as dialkylperoxides (e.g. 2,5-dimethyl-2,5-di(tert.-butylperoxy)hexane, dicumylperoxide, etc.), and the like.

The crosslinking agent is used usually in an amount of 1.5 wt. parts or less, preferably in an amount of 0.8 wt. parts or less per 100 wt. parts of the total weight of the olefin resin and ethylene-$\alpha$-olefin copolymer rubber which are crosslinked.

When an organic peroxide is used as a crosslinking agent, and the dynamic crosslinking is carried out in the presence of a crosslinking aid such as a bismaleimide compound, the third layer comprising the partially crosslinked composition has good heat resistance. In this case, the amount of the organic peroxide is usually 1 wt. parts or less, preferably 0.8 wt. parts or less per 100 wt. parts of the total weight of the thermoplastic olefin resin and ethylene-$\alpha$-olefin copolymer rubber, and the amount of the crosslinking aid is usually 1 wt. parts or less, preferably 0.8 wt. parts or less per 100 wt. parts of the total weight of the thermoplastic olefin resin and ethylene-$\alpha$-olefin copolymer rubber. Preferably, the crosslinking agent is added prior to the addition of the crosslinking agent. In general, the crosslinking aid is compounded during the kneading of the olefin resin and ethylene-$\alpha$-olefin copolymer rubber.

The dynamic crosslinking is carried out, for example, by kneading the composition of the thermoplastic olefin resin and ethylene-$\alpha$-olefin copolymer rubber and the crosslinking agent with a single or twin screw extruder. The shear rate during the dynamic crosslinking is preferably at least $1 \times 10^3 \ sec^{-1}$.

In general, the processability of the composition during the above kneading and crosslinking steps can be improved, when an ethylene-$\alpha$-olefin copolymer rubber containing a mineral oil base softening agent (e.g. paraffinic process oil, etc.), that is, an oil-extended ethylene-$\alpha$-olefin copolymer rubber, is used.

The amount of the mineral oil base softening agent is usually 120 wt. parts or less, preferably between 20 and 120 wt. parts per 100 wt. parts of the total weight of the thermoplastic olefin resin and ethylene-$\alpha$-olefin copolymer rubber which are dynamically crosslinked. The use of such a softening agent also improves the properties of the obtained three-ply laminate, as explained in the above.

In the step (1), the temperature on the molding surface of the mold for powder molding is not lower than the melting point of the used vinyl chloride resin, usually between 160 and 300°C, preferably between 180 and 280°C. The molding surface may have irregular patterns for forming decorations such as grains or stitches on the surface of the first layer.

The temperature of the first resin layer in the step (4) is higher than the melting point of the composition A, usually between 160 and 300°C, preferably between 180 and 280°C.

The temperature of the second resin layer in the step (7) is not lower than the melting point of the composition B, usually between 160 and 300°C, preferably between 180 and 280°C.

The heating time is determined according to other conditions such as the thickness of a layer to be formed.

The heating methods of the mold include a gas heating furnace method, an electric heating furnace method, a heat transfer medium-circulation method, a dipping method in a heat transfer medium oil or hot fluidized sand, a radiofrequency induction heating method, and the like.

The heating for foaming the laminate in the step (7) may be carried out while holding the laminate on the mold for powder molding, or after removing the laminate from the mold.

The heating temperature is not lower than the decomposition temperature of the used foaming agent, usually between 160 and 320°C, preferably between 180 and 300°C. The heating time is determined according to other conditions such as the kind of the foaming agent, the thickness of the laminate, and the like.

The three-ply laminate of the present invention is useful as a skin material for the molded article of a polyolefinic polymer, since the third layer of the three-ply laminate has good bonding properties with the polyolefinic polymer. Thus, the molded article comprising the substrate of a polyolefinic polymer, and the skin material of the three-ply laminate of the present invention which is bonded to the surface of the substrate has good bond strength between the substrate and skin material.

Examples of the polyolefinic polymer for the substrate may be the same as the olefin polymers exemplified for the third layer, but the kind of the polymer for the substrate is selected independently of that for the third layer.

The melt flow rate (MFR) of the polyolefinic polymer for the substrate is preferably in the range between 0.1 and 300 g/10 min., in particular, in the range between 1 and 200 g/10 min. MFR is measured at 230°C according to JIS K 6730.

The above molded article can be produced by a method comprising the following steps:

i) supplying a mass of a polyolefinic polymer, at least a surface of which is molten, on the third layer side of the skin material consisting of the three-ply laminate of the present invention,
ii) compressing the skin material and polyolefinic polymer to integrate them, and
iii) cooling the integrated skin material and polyolefinic polymer.

In general, the above method is performed using a molding apparatus equipped with a pair of male and female molds.

Needless to say, the polyolefinic polymer used in the step i), at least the surface of which is molten, may be molten in its entirety.

The compression in the step ii) may be effected by the closing force of the molds. When the entirely molten polyolefinic polymer is used, the compression may be effected by the supply (injection) pressure of the polymer. Furthermore, the compression may be effected by the combination of the mold closing force and the supply pressure of the polyolefinic polymer.

The cooling in the step iii) is usually carried out under pressure.

In the above method, the step ii) may be carried out after the completion of the step i), or may overlap the step i).

The above method includes injection molding, low pressure injection molding, press molding, and the like. Among them, the low-pressure injection molding and press molding are preferable in view of the prevention of the displacement of the skin material, and the preservation of the decorations formed on the skin material.

In one embodiment, the above method comprises the following steps:

a) placing a skin material between molding surfaces of opened male and female molds equipped in a molding apparatus,
b) supplying a molten polyolefinic polymer between the third layer of the skin material and the molding surface of the mold which faces the third layer,
c) closing the male and female molds until the clearance between the molds reaches a certain distance to integrate the skin material and polyolefinic polymer, and
d) cooling the integrated skin material and polyolefinic polymer.

The cooling in the step d) is usually carried out under pressure.

The step c) may be carried out after the completion of the step b), or may overlap the step b).

The direction of the mold closing in the molding apparatus is not limited. For example, the molds are closed in the up-and-down (vertical) or right-and-left (horizontal) direction.

The molten polyolefinic polymer may be supplied, for example, through a resin passage formed in a mold which faces the third layer of the laminate which has been positioned between the molds. Alternatively, the molten polymer may be supplied through a nose for supplying the polyolefinic polymer, which is inserted between the opened molds from the exterior of the molds. In this case, the nose is pulled out from the molds after the supply of the polymer.

When the skin material is produced using the mold for powder molding, the step i) can be performed by fitting the mold for powder molding, which carries the as-produced skin material, into either one of the male and female molds. In this case, the molding surface of the mold for powder molding forms as a part of the molding surface of either one of the molds equipped in the molding apparatus. This method can produce a molded article which preserves the decorations in good condition, which have been formed on the skin material surface during the production of the skin material.

A molded article consisting of a skin material and a substrate may be produced by supplying a mass of molten polyolefin between the skin material and the molding surface of one of the male and female mold, after the skin material is supplied between the molds and the molds are closed.

The male and female molds may be such molds that the outer peripheral surface of one mold and the inner wall surface of the other slide on each other. In this case, when a clearance between the outer peripheral surface and the inner wall surface is substantially the same as the thickness of the used skin material, a molding article having the surplus portions of the skin material at the edges of the article can be obtained. A molded article the edges of which are covered with the skin material can be obtained by folding back the surplus portions of the skin material over the backside of the article.

EXAMPLES

The present inventions will be illustrated by the following examples, which do not limit the scope of the present invention in any way.

The complex dynamic viscosities $\eta^*$ of polypropylene, polyolefinic polymers and thermoplastic elastomers used in Examples and Comparative Examples were calculated according to the above equation (1) using a storage elastic modulus $G^1$ and a loss elastic modulus $G^2$, which were measured with a dynamic analyzer (RD-7700 manufactured by Rheometrix) in a parallel mode, at an applied strain of 5 %, a sample temperature of 250°C and a frequency of 1 radian/sec.

Cushioning properties of the laminates obtained in Examples and Comparative Examples, and bond strength between a skin material and a substrate were evaluated as follows:

1. Cushioning properties

A Shore A hardness was measured according to ASTM D-2240. The smaller value of the Shore A hardness means better cushioning properties.

2. Bond strength between skin material and substrate

A laminate was cut in the form of a rectangle having a width of 20 mm, and a skin material and a substrate were peeled at a sample temperature of 20°C, a peeling rate of 200 mm/min. and a peeling angle of 180 degrees to measure a peeling strength between the skin material and substrate. The larger value of peeling strength means better bond strength between them.

Reference Example 1

Preparation of the powder of a composition for the first layer

A vinyl chloride resin (SUMILIT $S_x$-8GT manufactured by Sumitomo Chemical Co., Ltd.; an average particle size of 150 $\mu$m) (90 wt. parts) was charged in a high speed mixer and stirred at a constant rate. When the resin temperature reached 80°C, a trimellitate type plasticizer (60 wt. parts), a barium-zinc type stabilizer (3 wt. parts) and a pigment (1 wt. part) were added to the resin, and dry blended.

After the temperature of the content reached 120°C, the content was cooled. When the temperature was decreased to 50°C, a vinyl chloride resin (SUMILIT $P_x$-QLT manufactured by Sumitomo Chemical Co., Ltd.; an average particle size of 1 $\mu$m) (10 wt. parts) was added and stirred to uniformly disperse the resins. Thus, The powder of the composition for the first layer was obtained.

Reference Example 2

Preparation of the powder of a composition for the second layer

The powder of a composition for the second layer was prepared in the same manner as in Reference Example 1 except that azodicarbonamide (AZL-30 manufacture by OTSUKA Chemical Co., Ltd.; a decomposition temperature of 190°C) (1.5 wt. parts), zinc oxide (manufactured by SAKAI Chemical Industry Co., Ltd.; a foaming aid) (1 wt. part) and an acrylic foam stabilizer (SL-500S manufactured by NISSAN FERRO Co., Ltd.) (1 wt. part) were used in place of the pigment (1 wt. part).

Reference Example 3

Preparation of the powder of a composition for the third layer

The powder obtained in Reference Example 2 (177.5 wt. parts) and a polypropylene powder (B-200 manufactured by Sumitomo Seika Chemicals Co., Ltd.; an average particle size of 220 $\mu$m; $\eta^*$ of 9.8 x $10^4$ poises) (48 wt. parts) were charged in a high speed mixer and mixed at 25°C. Thus, The powder of the composition for the third layer was obtained.

Reference Example 4

Preparation of the powder of a thermoplastic olefin elastomer

EPDM ($ML_{1+4}$(100°C) of 242; a propylene unit content of 28 wt. %; an iodine value of 12) (25 wt. parts) and a mineral oil base softening agent (DIANAPROCESS PW-380) (25 wt. parts) were kneaded to obtain an oil-extended EPDM ($ML_{1+4}$(100°C) of 53). Then, the oil-extended EPDM (50 wt. parts), a propylene-ethylene random copolymer resin (an ethylene content of 5 wt. %; MFR of 90 g/10 min.) (50 wt. parts) and a bismaleimide compound (SUMIFINE BM manufactured by Sumitomo Chemical Co., Ltd.) (0.4 wt. part) were kneaded with a Banbury mixer for 10 minutes, and then pelletized with an extruder.

The obtained pellets (100 wt. parts) and 2,5-dimethyl-2,5-di(tert.-butylperoxy)hexane (SANPEROX APO manufactured by SANKEN KAKO KABUSHIKIKAISHA) (0.1 wt. part) were charged in a twin-screw kneader and dynamically crosslinked at 220°C, followed by pelletizeing.

The pellets were cooled to -100°C with liquid nitrogen, and ground. Thus, the powder of the thermoplastic olefin elastomer (an average particle size of 190 μm; $\eta^*$ of 6.4 x $10^3$ poises) was obtained.

Reference Example 5

Preparation of the powder of a composition for the third layer

The powder of a composition for the third layer was prepared in the same manner as in Reference Example 3 except that the powder obtained in Reference Example 4 (48 wt. parts) was used in place of polypropylene.

Reference Example 6

Preparation of the powder of a composition for the second layer

The powder of a composition for the second layer was prepared in the same manner as in Reference Example 1 except that azodicarbonamide (AZL-30 manufacture by OTSUKA Chemical Co., Ltd.; a decomposition temperature of 190°C) (1.5 wt. parts), trioctylmonomethylammonium chloride (0.5 wt. part), epoxidized linseed oil (5 wt. parts), trimellitic anhydride (0.5 wt. part) and a perchlorate ion type hydrotalcite compound (2 wt. pats) were used in place of the pigment.

Reference Example 7

Preparation of the powder of a composition for the third layer

The powder of a composition for the third layer was prepared in the same manner as in Reference Example 3 except that the powder obtained in Reference Example 1 was used in place of the powder obtained in Reference Example 2.

Reference Example 8

Preparation of the powder of a composition for the third layer

The powder of a composition for the third layer was prepared in the same manner as in Reference Example 3 except that the powder obtained in Reference Example 1 was used in place of the powder obtained in Reference Example 2, and the powder obtained in Reference Example 4 was used in place of polypropylene.

Example 1

Preparation of a skin material

The powder obtained in Reference Example 1 was dusted over a nickel mold (15 cm x 15 cm), which had been heated to 240°C. After 5 seconds, unfused powder was shaken off. Thus, the resin layer (1) of the composition of Reference Example 1 in the molten state remained on the mold. Just after that, the powder obtained in Reference Example 2 was dusted over the resin layer (1). After 10 seconds, the unfused powder was shaken off. Thus, the resin layer (2) of the composition of Reference Example 2 in the molten state remained on the resin layer (1). Immediately after that, the powder obtained in Reference Example 3 was dusted over the resin layer (2). After 10 seconds, the unfused powder was shaken off. Thus, the resin layer (3) of the composition of Reference Example 3 in the molten state remained on the resin layer (2).

The mold, which carried the obtained laminate of the molten resin layers, was heated in an oven at 280°C for 90 seconds to foam the resin layers (2) and (3). Then, the mold was taken out from the oven and cooled to obtain the three-ply skin material. After that, the skin material was removed from the mold.

Example 2

The sheet with a thickness of 3 mm of polypropylene (SUMITOMO NOBLEN BPZ 5077 manufactured by Sumitomo Chemical Co., Ltd.; block polypropylene; MFR (230°C) of 40 g/10 min.: a talc content of 15 wt. %) was placed on an aluminum plate, and heated in an oven at 220°C for 5 minutes. Thus, a sheet form molten polypropylene was obtained on the aluminum plate.

The skin material obtained in Example 1 was laminated on the molten polypropylene sheet with the third layer of the skin material being in contact with the molten polypropylene sheet, and compressed under a pressure of 25 g/cm$^2$. Then, the laminate was cooled while maintaining the same pressure to obtain the molded article.

The results of the evaluations of this article are shown in Table 1.

Example 3

A skin material was produced in the same manner as in Example 1 except that the powder obtained in Reference Example 5 was used in place of the powder obtained in Reference Example 3.

Example 4

A molded article was produced in the same manner as in Example 2 except that the skin material obtained in Example 3 was used in place of the skin material obtained in Example 1.

The results of the evaluations of this molded article are shown in Table 1.

Example 5

A skin material was produced in the same manner as in Example 1 except that the powder obtained in Reference Example 6 was used in place of the powder obtained in Reference Example 2.

Example 6

A molded article was produced in the same manner as in Example 2 except that the skin material obtained in Example 5 was used in place of the skin material obtained in Example 1.

The results of the evaluations of this molded article are shown in Table 1.

Comparative Example 1

The powder obtained in Reference Example 1 was dusted over a nickel mold (15 cm x 15 cm), which had been heated to 240°C. After 5 seconds, unfused powder was shaken off. Thus, the resin layer (1) of the composition of Reference Example 1 in the molten state remained on the mold. Just after that, the powder obtained in Reference Example 2 was dusted over the resin layer (1). After 10 seconds, the unfused powder was shaken off. Thus, the resin layer (2) of the composition of Reference Example 2 in the molten state remained on the resin layer (1).

The mold, which carried the obtained laminate of the molten resin layers, was heated in an oven at 280°C for 90 seconds to foam the resin layer (2). Then, the mold was taken out from the oven and cooled to obtain the two-ply skin material. After that, the skin material was removed from the mold.

Comparative Example 2

A molded article was produced in the same manner as in Example 2 except that the skin material obtained in Comparative Example 1 was used in place of the skin material obtained in Example 1.

The results of the evaluations of this molded article are shown in Table 1.

Comparative Example 3

The powder obtained in Reference Example 1 was dusted over a nickel mold (15 cm x 15 cm), which had been heated to 240°C. After 5 seconds, unfused powder was shaken off. Thus, the resin layer (1) of the composition of Reference Example 1 in the molten state remained on the mold. Just after that, the powder obtained in Reference Example 3 was dusted over the resin layer (1). After 10 seconds, the unfused powder was shaken off. Thus, the resin layer (2) of the composition of Reference Example 3 in the molten state remained on the resin layer (1).

The mold, which carried the obtained laminate of the molten resin layers, was heated in an oven at 280°C for 90 seconds to foam the resin layer (2). Then, the mold was taken out from the oven and cooled to obtain the two-ply skin material. After that, the skin material was removed from the mold.

Comparative Example 4

A molded article was produced in the same manner as in Example 2 except that the skin material obtained in Comparative Example 3 was used in place of the skin material obtained in Example 1.

The results of the evaluations of this molded article are shown in Table 1.

Comparative Example 5

A two-ply skin material was produced in the same manner as in Comparative Example 3 except that the powder obtained in Reference Example 4 was used in place of the powder obtained in Reference Example.

Comparative Example 6

A molded article was produced in the same manner as in Example 2 except that the skin material obtained in Comparative Example 5 was used in place of the skin material obtained in Example 1.

The results of the evaluations of this molded article are shown in Table 1.

Example 7

A three-ply skin material was produced in the same manner as in Example 1 except that the powder obtained in Reference Example 7 was used in place of the powder obtained in Reference Example 3.

Example 8

A molded article was produced in the same manner as in Example 2 except that the skin material obtained in Example 7 was used in place of the skin material obtained in Example 1.

The results of the evaluations of this molded article are shown in Table 1.

Example 9

The powder obtained in Reference Example 1 was dusted over a nickel mold (15 cm x 15 cm), which had been heated to 240°C. After 5 seconds, unfused powder was shaken off. Thus, the resin layer (1) of the composition of Reference Example 1 in the molten state remained on the mold. Just after that, the powder obtained in Reference Example 2 was dusted over the resin layer (1). After 10 seconds, the unfused powder was shaken off. Thus, the resin layer (2) of the composition of Reference Example 2 in the molten state remained on the resin layer (1). Immediately after that, the powder obtained in Reference Example 8 was dusted over the resin layer (2). After 10 seconds, the unfused powder was shaken off. Thus, the resin layer (3) of the composition of Reference Example 8 in the molten state remained on the resin layer (2).

The mold, which carried the obtained laminate of the molten resin layers, was heated in an oven at 280°C for 90 seconds to foam the resin layer (2). Then, the mold was taken out from the oven and cooled to obtain the three-ply skin material. After that, the skin material was removed from the mold.

Example 10

A molded article was produced in the same manner as in Example 2 except that the skin material obtained in Example 9 was used in place of the skin material obtained in Example 1.

The results of the evaluations of this molded article are shown in Table 1.

Table 1

|  | Cushioning properties (Shore A hardness) | Peeling strength between skin material and substrate (g/20 mm width) |
|---|---|---|
| Example 2 | 56 | 1270 |
| Example 4 | 55 | 1550 |
| Example 6 | 44 | 2060 |
| Example 8 | 55 | 590 |
| Example 10 | 57 | 610 |
| Comp. Ex. 2 | 56 | 120 |
| Comp. Ex. 4 | 64 | 1200 |
| Comp. Ex. 6 | 64 | 1460 |

Reference Example 9

Preparation of the powder of a composition for the third layer

The powder of a composition for the third layer was prepared in the same manner as in Reference Example 3 except that 16 wt. parts of the powder obtained in Reference Example 4 was used in place of 48 wt. parts of the polypropylene powder.

Reference Example 10

Preparation of the powder of a composition for the third layer

The powder of a composition for the third layer was prepared in the same manner as in Reference Example 3 except that 80 wt. parts of the powder obtained in Reference Example 4 was used in place of 48 wt. parts of the polypropylene powder.

Reference Example 11

Preparation of the powder of a composition for the third layer

The powder of a composition for the third layer was prepared in the same manner as in Reference Example 3 except that 160 wt. parts of the powder obtained in Reference Example 4 was used in place of 48 wt. parts of the polypropylene powder.

Reference Example 12

Preparation of the powder of a composition for the third layer

The powder of a composition for the third layer was prepared in the same manner as in Reference Example 3 except that 320 wt. parts of the powder obtained in Reference Example 4 was used in place of 48 wt. parts of the polypropylene powder.

Example 11

A three-ply skin material was produced in the same manner as in Example 1 except that the powder obtained in Reference Example 9 was used in place of the powder obtained in Reference Example 3.

## Example 12

A molded article was produced in the same manner as in Example 2 except that the skin material obtained in Example 11 was used in place of the skin material obtained in Example 1.

The results of the evaluations of this molded article are shown in Table 2.

## Example 13

A three-ply skin material was produced in the same manner as in Example 1 except that the powder obtained in Reference Example 10 was used in place of the powder obtained in Reference Example 3.

## Example 14

A molded article was produced in the same manner as in Example 2 except that the skin material obtained in Example 13 was used in place of the skin material obtained in Example 1.

The results of the evaluations of this molded article are shown in Table 2.

## Example 15

A three-ply skin material was produced in the same manner as in Example 1 except that the powder obtained in Reference Example 11 was used in place of the powder obtained in Reference Example 3.

## Example 16

A molded article was produced in the same manner as in Example 2 except that the skin material obtained in Example 15 was used in place of the skin material obtained in Example 1.

The results of the evaluations of this molded article are shown in Table 2.

## Example 17

A three-ply skin material was produced in the same manner as in Example 1 except that the powder obtained in Reference Example 12 was used in place of the powder obtained in Reference Example 3.

## Example 18

A molded article was produced in the same manner as in Example 2 except that the skin material obtained in Example 17 was used in place of the skin material obtained in Example 1.

The results of the evaluations of this molded article are shown in Table 2.

Table 2

| | Cushioning properties (Shore A hardness) | Peeling strength between skin material and substrate (g/20 mm width) |
|---|---|---|
| Example 12 | 57 | 690 |
| Example 14 | 55 | 1260 |
| Example 16 | 56 | 940 |
| Example 18 | 57 | 710 |

## Reference Example 13

Preparation of the powder of a composition for the third layer

The powder obtained in Reference Example 1 (177.5 wt. parts) and a polyethylene powder (G401 manufactured by Sumitomo Seika Chemical Co., Ltd.; an average particle size of 230 $\mu$m; $\eta^*$ of 9.3 x $10^3$ poises) (48 wt. parts) were charged in a high speed mixer and mixed at 25°C. Thus, The powder of the composition for the third layer was obtained.

Reference Example 14

Preparation of the powder of a composition for the third layer

The powder of a composition for the third layer was prepared in the same manner as in Reference Example 13 except that a polypropylene powder (D501 manufactured by Sumitomo Chemical Co., Ltd.; an average particle size of 240 $\mu$m; $\eta^*$ of 1.0 x $10^5$ poises) (48 wt. parts) was used in place of the polyethylene powder.

Reference Example 15

Preparation of the powder of a composition for the third layer

The powder of a composition for the third layer was prepared in the same manner as in Reference Example 13 except that a thermoplastic olefin elastomer powder (an average particle size of 180 $\mu$m; $\eta^*$ of 1.4 x $10^3$ poises) (48 wt. parts) was used in place of the polyethylene powder.

Reference Example 16

Preparation of the powder of a composition for the second layer

The powder of a composition for the second layer was prepared in the same manner as in Reference Example 1 except that azodicarbonamide (AZL-30 manufacture by OTSUKA Chemical Co., Ltd.; a decomposition temperature of 190°C) (1.5 wt. parts), zinc oxide (manufactured by SAKAI Chemical Co., Ltd.; a foaming aid) (1 wt. part), an acrylic foam stabilizer (1.5 wt. parts), trioctylmonomethylammonium chloride (0.5wt.part), an epoxidized linseed oil (5 wt. parts), trimellitic anhydride (0.5 wt. part) and a perchlorate ion type hydrotalcite compound (2 wt. parts) were used in place of the pigment (1 wt. part).

Reference Example 17

Preparation of the powder of a composition for the third layer

The powder of a composition for the third layer was prepared in the same manner as in Reference Example 13 except that a thermoplastic olefin elastomer powder (TPE 820 manufactured by Sumitomo Chemical Co., Ltd.; an average particle size of 240 $\mu$m; $\eta^*$ of 1.3 x $10^5$ poises) (48 wt. parts) was used in place of the polyethylene powder.

Reference Example 18

Preparation of the powder of a composition for the third layer

The powder of a composition for the third layer was prepared in the same manner as in Reference Example 13 except that a thermoplastic olefin elastomer powder (TPE 3681 manufactured by Sumitomo Chemical Co., Ltd.; an average particle size of 230 $\mu$m; $\eta^*$ of 2.6 x $10^5$ poises) (48 wt. parts) was used in place of the polyethylene powder.

Reference Example 19

Preparation of the powder of a composition for the third layer

The powder of a composition for the third layer was prepared in the same manner as in Reference Example 13 except that a thermoplastic olefin elastomer powder (5551 Z manufactured by SHOWA DENKO Co., Ltd.; an average particle size of 130 $\mu$m; $\eta^*$ of 2.3 x $10^5$ poises) (48 wt. parts) was used in place of the polyethylene powder.

Example 19

A three-ply skin material was produced in the same manner as in Example 9 except that the powder obtained in Reference Example 13 was used in place of the powder obtained in Reference Example 8.

**Example 20**

A molded article was produced in the same manner as in Example 2 except that the skin material obtained in Example 19 was used in place of the skin material obtained in Example 1.

The results of the evaluations of this molded article are shown in Table 3.

**Example 21**

A three-ply skin material was produced in the same manner as in Example 9 except that the powder obtained in Reference Example 14 was used in place of the powder obtained in Reference Example 8.

**Example 22**

A molded article was produced in the same manner as in Example 2 except that the skin material obtained in Example 21 was used in place of the skin material obtained in Example 1.

The results of the evaluations of this molded article are shown in Table 3.

**Example 23**

A three-ply skin material was produced in the same manner as in Example 9 except that the powder obtained in Reference Example 15 was used in place of the powder obtained in Reference Example 8.

**Example 24**

A molded article was produced in the same manner as in Example 2 except that the skin material obtained in Example 23 was used in place of the skin material obtained in Example 1.

The results of the evaluations of this molded article are shown in Table 3.

**Example 25**

A three-ply skin material was produced in the same manner as in Example 9 except that the powder obtained in Reference Example 16 was used in place of the powder obtained in Reference Example 8.

**Example 26**

A molded article was produced in the same manner as in Example 9 except that the skin material obtained in Example 25 was used in place of the skin material obtained in Example 1.

The results of the evaluations of this molded article are shown in Table 3.

**Comparative Example 7**

The powder obtained in Reference Example 1 was dusted over a nickel mold (15 cm x 15 cm), which had been heated to 240°C. After 5 seconds, unfused powder was shaken off. Thus, the resin layer (1) of the composition of Reference Example 1 in the molten state remained on the mold. Just after that, the powder obtained in Reference Example 8 was dusted over the resin layer (1). After 10 seconds, the unfused powder was shaken off. Thus, the resin layer (2) of the composition of Reference Example 8 in the molten state remained on the resin layer (1).

The mold, which carried the obtained laminate of the molten resin layers, was heated in an oven at 280°C for 90 seconds to foam the resin layer (2). Then, the mold was taken out from the oven and cooled to obtain the skin material. After that, the skin material was removed from the mold.

**Comparative Example 8**

A molded article was produced in the same manner as in Example 2 except that the skin material obtained in Comparative Example 7 was used in place of the skin material obtained in Example 1.

The results of the evaluations of this molded article are shown in Table 3.

16

Comparative Example 9

A three-ply skin material was produced in the same manner as in Example 9 except that the powder obtained in Reference Example 17 was used in place of the powder obtained in Reference Example 8.

Comparative Example 10

A molded article was produced in the same manner as in Example 9 except that the skin material obtained in Comparative Example 9 was used in place of the skin material obtained in Example 1.
The results of the evaluations of this molded article are shown in Table 3.

Comparative Example 11

A three-ply skin material was produced in the same manner as in Example 9 except that the powder obtained in Reference Example 18 was used in place of the powder obtained in Reference Example 8.

Comparative Example 12

A molded article was produced in the same manner as in Example 9 except that the skin material obtained in Comparative Example 11 was used in place of the skin material obtained in Example 1.
The results of the evaluations of this molded article are shown in Table 3.

Comparative Example 13

A three-ply skin material was produced in the same manner as in Example 9 except that the powder obtained in Reference Example 19 was used in place of the powder obtained in Reference Example 8.

Comparative Example 14

A molded article was produced in the same manner as in Example 9 except that the skin material obtained in Comparative Example 13 was used in place of the skin material obtained in Example 1.
The results of the evaluations of this molded article are shown in Table 3.

Table 3

| | Cushioning properties (Shore A hardness) | Peeling strength between skin material and substrate (g/20 mm width) |
|---|---|---|
| Example 20 | 57 | 640 |
| Example 22 | 57 | 860 |
| Example 24 | 56 | 630 |
| Example 26 | 43 | 1650 |
| Comp. Ex. 8 | 65 | 1520 |
| Comp. Ex. 10 | 55 | 190 |
| Comp. Ex. 12 | 57 | 110 |
| Comp. Ex. 14 | 56 | 150 |

Example 27

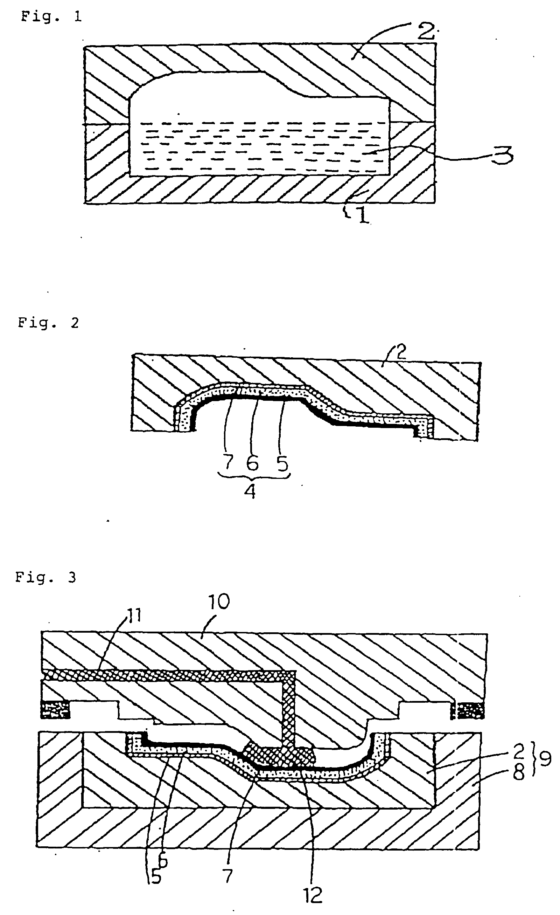

As shown in Fig. 1, the opening of a mold 2 for powder molding with grain patterns, which had been heated to 240°C, was mated with the opening of a container 1 in which the powder 3 of a composition for the first layer obtained in the same manner as in Reference Example 1 had been charged, and the mated openings were clamped with frames equipped around the openings.

Immediately after that, the clamped container 1 and mold 2 were rotated three turns over 5 seconds using a uniaxial rotation apparatus (an axis direction in the horizontal direction) (not shown). This operation supplied the powder 3 on the molding surface of the mold 2, and a part of the powder fused to form a resin layer (1). The unfused powder 3 was recovered in the container 1. Then, the container 1 was detached from the mold 2.

Immediately after that, the mold 2 carrying the resin layer (1) was attached to the container 1 in which the powder of a composition for the second layer obtained in the same manner as in Reference Example 16 had been charged, and clamped in the same way as in the previous step. The clamped container 1 and mold 2 were rotated one turn over 18 seconds using the uniaxial rotation apparatus. This operation supplied the powder 3 on the resin layer (1), and a part of the powder fused to form a resin layer (2) on the resin layer (1). The unfused powder was recovered in the container 1. Then, the container 1 was detached from the mold 2.

Immediately after that, the mold 2 carrying the resin layers (1) and (2) was attached to the container 1 in which the powder of a composition for the third layer obtained in the same manner as in Reference Example 4 had been charged, and clamped in the same way as in the above step. The clamped container 1 and mold 2 were rotated three turns over 20 seconds using the uniaxial rotation apparatus. This operation supplied the powder on the resin layer (2), and a part of the powder fused to form a resin layer (3) on the resin layer (2). The unfused powder was recovered in the container 1. Then, the container 1 was detached from the mold 2.

Thereafter, the mold 2 carrying the resin layers (1), (2) and (3) was heated at 250°C for 2 minutes, and then cooled to room temperature. Thus, a three-ply skin material 4, which consisted of the first layer 5, the second layer 6 and the third layer 7, was obtained.

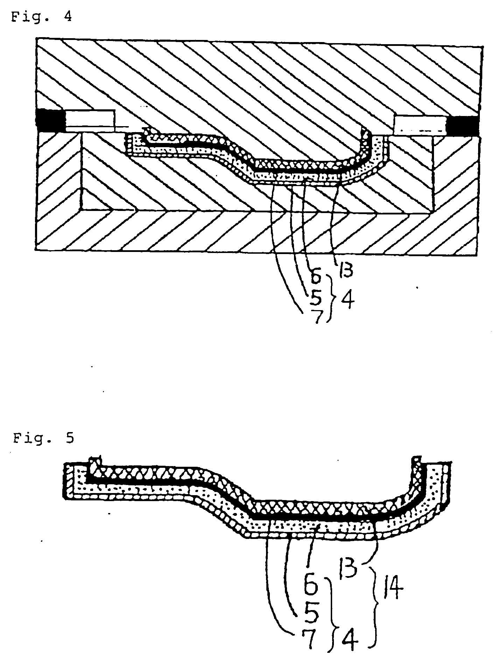

Next, as shown in Fig. 3, the mold 2 for powder molding, which carried the skin material 4, was united with a mold base 8 to assemble a female mold 9. The female mold 9 and male mold 10 were started to close. While the molds 9 and 10 were in the unclosed state, a mass of a polypropylene resin 12 (SUMITOMO NOBLEN BTA 51E1 manufactured by Sumitomo Chemical Co., Ltd.; MFR of 65 g/10 min.), which had been heated to 190°C, was supplied between the skin material 4 and male mold 10 through a resin passage 11 which was provided in the male mold 10. Then, the closing of the molds 9 and 10 was completed under a pressure of 30 kg/cm$^2$ on the molding surface (see Fig. 4).

After cooling, the molds 9 and 10 were opened, and a molded article 1 consisting of the skin material 4 and the substrate 13 was removed from the mold. The cross section of this article is shown in Fig. 5.

The molded article has the sharp grain decoration on its surface. It had a shore A hardness of 54, and thus the cushioning properties were good. The peeling strength between the skin material and substrate was 1470 g/20 mm, and thus the bond strength between them was also good.

## Claims

1. A three-ply laminate consisting of a vinyl chloride resin layer (the first layer), a layer of a composition containing a vinyl chloride resin and an olefin polymer which has a complex dynamic viscosity $\eta^*$ of 1.2 x 10$^5$ poises or less (the third layer), and a vinyl chloride resin foamed layer (the second layer) which is present between the first and third layers.

2. A three-ply laminate according to claim 1, wherein an amount of said olefin polymer in the third layer is in the range between 10 and 350 wt. parts per 100 wt. parts of said vinyl chloride resin.

3. A three-ply laminate according to claim 1, wherein said olefin polymer in the third layer is at least one polymer selected from the group consisting of thermoplastic olefin resins and thermoplastic olefin elastomers.

4. A thee-play laminate according to claim 1, wherein said olefin polymer in the third layer contains a mineral oil base softening agent.

5. A method for the production of a three-ply laminate as claimed in claim 1, comprising the steps of:

   1) supplying a vinyl chloride resin powder on a molding surface of a mold for powder molding, said molding surface being heated to a temperature not lower than the melting temperature of said resin,
   2) fusing particles of said powder together and forming the first resin layer of said vinyl chloride resin,
   3) supplying a powder of a composition (A) comprising a vinyl chloride resin and a foaming agent on said first resin layer which is being heated to a temperature not lower than the melting temperature of said composition (A),
   4) fusing powder particles of said composition (A) together and forming the second resin layer of laid composition (A) on the first resin layer,

5) supplying a powder of a composition (B) comprising a vinyl chloride resin and an olefin polymer having a complex dynamic viscosity $\eta^*$ of $1.2 \times 10^5$ poises or less on said second resin layer which is being heated to a temperature not lower than the melting temperature of said composition (B),

6) fusing powder particles of said composition (B) together and forming the third resin layer of said composition (B) on the second resin layer to form the laminate consisting of the first, second and third resin layers, and

7) heating said laminate to a temperature not lower than the decomposition temperature of the foaming agent contained in said composition (A) to foam said second layer.

6. A method according to claim 5, which further comprises at least one step selected from the group consisting of:

a step for removing unfused powder of said vinyl chloride resin after the step 2),
a step for removing unfused powder of said composition A after the step 4), and
a step for removing unfused powder of said composition B after the step 6).

7. A method according to claim 5, wherein said composition A further contains a quaternary ammonium salt and a polyfunctional epoxy compound.

8. A method according to claim 5, wherein said composition B further contains a foaming agent, and the second and third resin layers are foamed at a temperature not lower than the decomposition temperatures of the foaming agent in the composition A and that in the composition B, in the step 7).

9. A molded article comprising a substrate made of a polyolefinic polymer, and a skin material consisting of a three-ply laminate as claimed in claim 1 which is laminated on the surface of the substrate.

10. A method for the production of a molded article as claimed in claim 9, comprising the steps of:

i) supplying a mass of a polyolefinic polymer, at least a surface of which is molten, on the third layer side of the skin material consisting of the three-ply laminate as claimed in claim 1,
ii) compressing the skin material and polyolefinic polymer to integrate them, and
iii) cooling the integrated skin material and polyolefinic polymer.

11. A method according to claim 10, wherein the step ii) is carried out after the completion of the step i).

12. A method according to claim 10, wherein the step ii) overlaps the step i).

13. A method for the production of a molded article as claimed in claim 9, comprising the steps of:

a) placing a skin material between molding surfaces of opened male and female molds equipped in a molding apparatus,
b) supplying a molten polyolefinic polymer between the third layer of the skin material and the molding surface of the mold which faces the third layer,
c) closing the male and female molds until the clearance between the molds reaches a certain distance to integrate the skin material and polyolefinic polymer,
and
d) cooling the integrated skin material and polyolefinic polymer.

14. A method according to claim 13, wherein the step c) is carried out after the completion of the step b).

15. A method according to claim 13, wherein the step c) overlaps the step b).

Fig. 1

Fig. 2

Fig. 3

Fig. 4

Fig. 5

## INTERNATIONAL SEARCH REPORT

| International application No. |
| --- |
| PCT/JP96/03799 |

**A. CLASSIFICATION OF SUBJECT MATTER**

Int. Cl$^6$ B32B5/18, B32B27/30, 101, B32B27/32

According to International Patent Classification (IPC) or to both national classification and IPC

**B. FIELDS SEARCHED**

Minimum documentation searched (classification system followed by classification symbols)

Int. Cl$^6$ B32B5/18, B32B27/30, 101, B32B27/32

Documentation searched other than minimum documentation to the extent that such documents are included in the fields searched

| Jitsuyo Shinan Koho | 1926 – 1996 |
| Kokai Jitsuyo Shinan Koho | 1971 – 1996 |
| Toroku Jitsuyo Shinan Koho | 1994 – 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 3-130134, A (GenCorp Inc.), June 3, 1991 (03. 06. 91) & EP, 395814, A | 1 – 15 |
| A | JP, 3-104632, A (Nishikawa Kasei K.K.), May 1, 1991 (01. 05. 91)(Family: none) | 1 – 15 |
| A | JP, 2-67129, A (Toray Industries, Inc.), March 7, 1990 (07. 03. 90)(Family: none) | 1 – 15 |
| A | JP, 1-163057, A (Sunstar Giken K.K.), June 27, 1989 (27. 06. 89)(Family: none) | 1 – 15 |
| A | JP, 4-31148, A (Nissan Motor Co., Ltd.), February 3, 1992 (03. 02. 92)(Family: none) | 1 – 15 |

☐ Further documents are listed in the continuation of Box C.　☐ See patent family annex.

```
*    Special categories of cited documents:
"A"  document defining the general state of the art which is not considered
     to be of particular relevance
"E"  earlier document but published on or after the international filing date
"L"  document which may throw doubts on priority claim(s) or which is
     cited to establish the publication date of another citation or other
     special reason (as specified)
"O"  document referring to an oral disclosure, use, exhibition or other
     means
"P"  document published prior to the international filing date but later than
     the priority date claimed
```

```
"T"  later document published after the international filing date or priority
     date and not in conflict with the application but cited to understand
     the principle or theory underlying the invention
"X"  document of particular relevance; the claimed invention cannot be
     considered novel or cannot be considered to involve an inventive
     step when the document is taken alone
"Y"  document of particular relevance; the claimed invention cannot be
     considered to involve an inventive step when the document is
     combined with one or more other such documents, such combination
     being obvious to a person skilled in the art
"&"  document member of the same patent family
```

| Date of the actual completion of the international search | Date of mailing of the international search report |
| --- | --- |
| April 15, 1997 (15. 04. 97) | April 30, 1997 (30. 04. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)